# EUROPEAN PATENT SPECIFICATION

(11) **EP 3 298 648 B1**
(45) Date of publication and mention of the grant of the patent: **12.02.2020**
(21) Application number: 15725896.3
(22) Date of filing: 18.05.2015
(51) Int. Cl.: H01M 2/02

(54) **ANODE CAN SACRIFICIAL MANDRELS AND FABRICATION METHODS**
ANODE OPFERFORMSTÄBE UND DEREN HERSTELLUNGSVERFAHREN
MANDRIN SACRIFICIEL ET METHODE POUR SA PRODUCTION

(43) Date of publication of application: 28.03.2018
(73) Proprietor: Sonova AG, 8712 Stäfa (CH)
(72) Inventor: ZINK, Christian, CH-8005 Zürich (CH)
(86) International application number: PCT/IB2015/053662
(87) International publication number: WO 2016/185250

(56) References cited:
- US-A1- 2013 125 387
- US-B1- 6 346 030
- US-B1- 6 422 528
- US-B1- 6 816 042
- US-B1- 7 422 714

## Description

### BACKGROUND

### 1. Field

The present inventions relate generally to hearing instrument batteries and, more specifically, methods of fabricating anode cans for use in hearing instrument batteries.

### 2. Description of the Related Art

Extended wear hearing instruments are configured to be worn continuously, from several weeks to several months, inside the ear canal. Such devices may be miniature in size in order to fit entirely within the ear canal and are configured such that the receiver fits deeply in the ear canal in close proximity to the tympanic membrane. Batteries such as metal-air batteries are an integral part, i.e., a non-removable part, of extended wear hearing instruments. In some instances, the batteries include elongate anode cans with relatively complex shapes that are volumetrically efficient and, in conjunction with other aspects of the extended wear hearing instruments, facilitate placement of the hearing instruments deep within the ear canal. Examples of such batteries may be found in, for example, U.S. Patent No. 8,682,01 6.

Anode cans having complex shapes may be formed by processes that involve the use of a sacrificial mandrel because the shapes are not amenable to deep drawing and stamping processes. The present inventor has determined that conventional sacrificial mandrel based anode can fabrication processes are susceptible to improvement. For example, the sacrificial mandrels employed in conventional processes are formed from die cast zinc, and the metal which forms the anode cans is deposited onto the zinc sacrificial mandrels. Hydrochloric acid is used to remove the zinc after the anode can is formed. The use of zinc as the sacrificial material, as well as the use of hydrochloric acid to remove the zinc, creates a number of issues. For example, because surface defects such as pores, sinkholes and bubbles are frequently associated with die casting, a zinc mandrel must be chemically etched or otherwise finished to obtain the desired surface properties prior to depositing the anode can material onto the mandrel. The subsequent use of hydrochloric acid to remove the zinc mandrel, on the other hand, precludes the use of certain materials for the innermost layer of the anode can (e.g., tin and indium), which would improve the performance and long term stability of metal-air batteries, because hydrochloric acid vigorously attacks these materials. Dissolving the zinc with hydrochloric acid also results in waste that, preferably, should be avoided.

### SUMMARY

An anode can fabrication method in accordance with one embodiment of a present invention includes the steps of depositing metal onto an anode can sacrificial mandrel formed from a polymer that dissolves in the presence of an organic solvent and dissolving the sacrificial mandrel with the organic solvent.

An anode can sacrificial mandrel in accordance with one embodiment of a present invention includes an anode can anode portion formed from a polymer that dissolves in the presence of an organic solvent and an anode can cathode portion formed from the polymer that dissolves in the presence of the organic solvent.

There are a number of advantages associated with such methods and apparatus. By way of example, but not limitation, organic solvents do not attack metal in general, and do not attack tin and indium in particular, thereby facilitating the use of a wider range of metals for the innermost layer of an anode can and, ultimately, superior batteries. Organic solvents also dissolve polymers in a physicochemical process, where the polymer simply goes into solution, which allows the solvent to be distilled and reused. Only a small amount of waste (highly concentrated polymer in solvent) is generated. In some instances, equipment may be employed that continuously distills the solvent within a closed system. Hydrochloric acid, on the other hand, dissolves zinc in a chemical reaction and, therefore, is used up. Fresh hydrochloric acid must be used for each batch or anode cans, which results in a large amount of waste. Additionally, injection molded polymer sacrificial mandrels also do not require finishing, as do conventional mandrels.

### BRIEF DESCRIPTION OF THE DRAWINGS

Detailed descriptions of the exemplary embodiments will be made with reference to the accompanying drawings.
FIG. 1 is a perspective view (with a cutaway) of a battery with an elongate anode can that has a relatively complex shape.
FIG. 2 is a perspective view of the anode can illustrated in FIG. 1 prior to assembly and crimping.
FIG. 3 is an end view of the anode can illustrated in FIG. 1 prior to assembly and crimping.
FIG. 4 is a top view of the anode can illustrated in FIG. 1 prior to assembly and crimping.
FIGS. 5A and 5B are side and top views of a sacrificial mandrel assembly in accordance with one embodiment of a present invention.
FIG. 5C is a section view taken along line 5C-5C in FIG. 5A.
FIGS. 6A and 6B are side (with a cutaway) and top views of a step in a process in accordance with one embodiment of a present invention.
FIG. 6C is a section view taken along line 6C-6C in FIG. 6A.
FIGS. 7A and 7B are side (with a cutaway) and top views of a step in a process in accordance with one embodiment of a present invention.
FIG. 7C is a section view taken along line 7C-7C in FIG. 7A.
FIGS. 8A and 8B are side (with a cutaway) and top views of a step in a process in accordance with one embodiment of a present invention.
FIG. 8C is a section view taken along line 8C-8C in FIG. 8A.
FIGS. 9A and 9B are section and bottom views of a step in a process in accordance with one embodiment of a present invention.

### DETAILED DESCRIPTION OF EXEMPLARY EMBODIMENTS

The following is a detailed description of the best presently known modes of carrying out the inventions. This description is not to be taken in a limiting sense, but is made merely for the purpose of illustrating the general principles of the inventions. To that end, the present inventions may be used to manufacture a wide variety of anode cans.

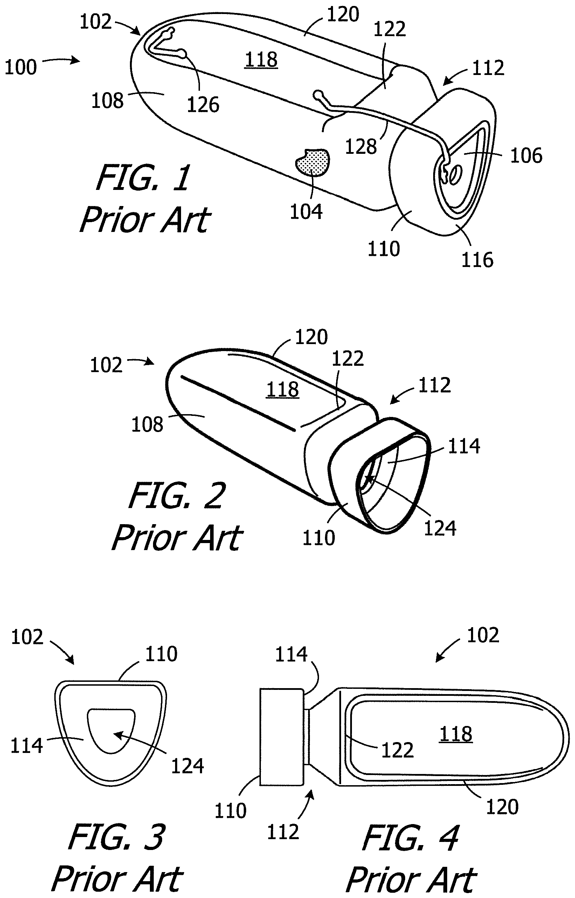

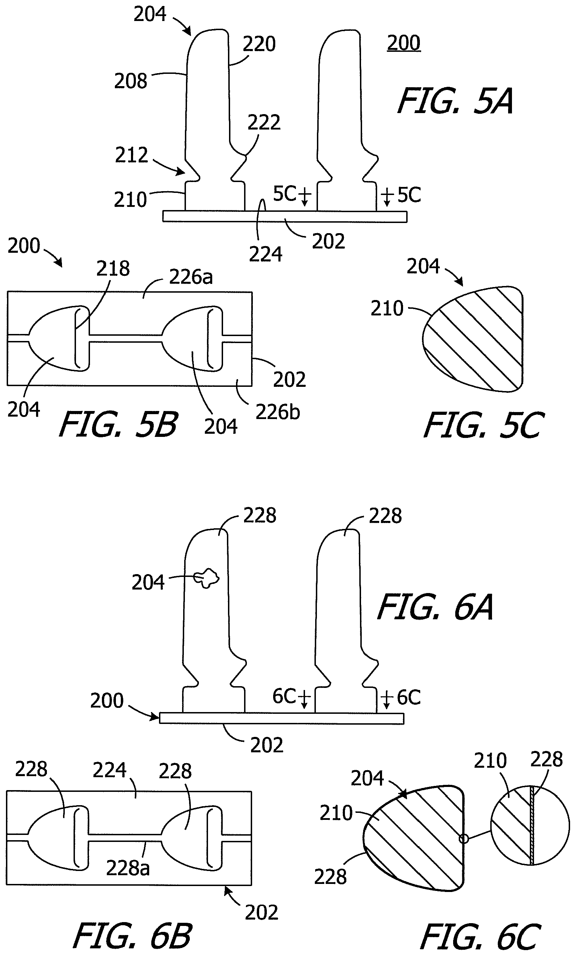

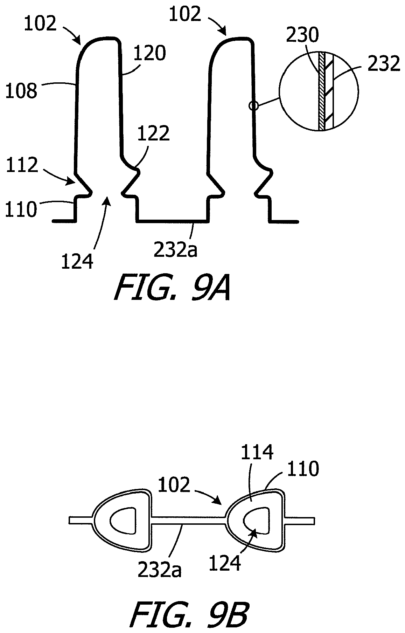

The exemplary battery 100 illustrated in FIG. 1 includes a hollow anode can 102 (sometimes referred to as a "battery can") that is one example of an anode can that may be manufactured with the exemplary sacrificial mandrel and fabrication techniques discussed below with reference to FIGS. 5A-10. In addition to the exemplary anode can 102, the battery 100 includes anode material 104 and cathode assembly 106. The anode can 102, which is shown an empty and pre-crimped state in FIGS. 2-4, includes an anode portion 108 for the anode material 104 and a cathode portion 110 for a cathode assembly 106. The exemplary anode can 102 is also provided with an inwardly contoured region 112 (or "neck") that defines an external retention ledge 114 at the anode/cathode junction on which the anode can 102 is supported during the portion of the battery assembly process that involves crimping a region 116 of the cathode portion 110 over the cathode assembly 106. The cross-sectional area of the contoured region 102 is less than that of the anode portion 108 and cathode portion 110. The exemplary anode can 102 also includes a support surface 118 with a shape that corresponds to the shape of the adjacent portion of a hearing assistance device acoustic assembly. In the illustrated embodiment, the support surface 118 is a relatively flat, recessed area defined between side protrusions 120 and a lateral end protrusion 122. The protrusions 120 and 122 align the acoustic assembly relative to the battery and also shift some of the battery volume to a more volumetrically efficient location. The anode can 102 also includes an inlet 124 for the anode material 104. Connection to the acoustic assembly may be accomplished through the use of anode and cathode wires 126 and 128 or other suitable instrumentalities. Additional details concerning the exemplary battery 100 and hearings devices that may include the battery are provided in U.S. Pat. No. 8,682,01 6.

Turning to FIGS. 5A-5C, an exemplary sacrificial mandrel assembly 200 includes a base 202 and one or more anode can sacrificial mandrels (or "sacrificial mandrels" or "mandrels") 204 extending from the base that have the same size and shape as the innermost surface of the pre-crimped hollow anode can 102. Although two sacrificial mandrels are shown in the illustrated implementation, the number may be far larger. Also, although the mandrels 204 are identical in the illustrated implementation, other mandrel assemblies may include a variety of differently sized and/or shaped mandrels. Each sacrificial mandrel 204 has an anode portion 208, a cathode portion 210, an inwardly contoured region 212, and a support surface 218 (FIG. 5B) between side protrusions 220 and lateral end protrusion 222. The anode portion 208, cathode portion 210, and inwardly contoured region 212 each define a cross-sectional area in a plane perpendicular to the longitudinal axis of the mandrel 204 (note FIG. 5C). The cross-sectional area of the inwardly contoured region 212 is less than the respective cross-sectional areas of the anode portion 208 and the cathode portion 210. Referring more specifically to FIG. 5B, portions of the top surface 224 of the base 202 are covered by masks 226a and 226b. Exemplary mask materials include, but are not limited to, silicone rubber and metal mask materials. In other embodiments, the sacrificial mandrel assembly may be formed using a two-component injection molding process, where one component is the sacrificial mandrel material and the other component can be peeled off. The use of the masks 226a and 226b allow the amount of excess metal, which must be removed at the end of the process, to be minimized.

The exemplary sacrificial mandrel assembly 200 is a solid structure (FIG. 5C), but may include hollow portions in other implementations. The mandrel assembly 200 may be formed from polymers, such as thermoplastic polymers, that dissolve (or "melt") when solvents are applied thereto that do not attack the metals used to form the inner surface of the anode can. One example of such a thermoplastic polymer is polystyrene. Suitable solvents include organic solvents such as ethyl acetate, dimethylformamide, tetrahydrofuran, chloroform, and toluene, which do not attack metals such as copper, tin or indium. The polymer mandrel assembly 200 may be formed by, for example, an injection molding process.

The masked sacrificial mandrel assembly 200 is initially coated with a base layer of metal that forms an electrically conductive and pure surface (i.e., purity greater than 99.9%) for subsequent processing, as well as the innermost layer (and innermost surface) of the anode can. Physical vapor deposition ("PVD") or chemical coating methods such as electroless deposition may be employed. The masks 226a and 226b are then removed. As a result, and turning to FIGS. 6A-6C, a base layer of metal 228 covers both sacrificial mandrels 204. The base layer 228 also includes a thin strip 228a that extends from one mandrel to the other, to connect coated mandrels 204, and outward from the coated mandrels to facilitate handing during processing and electrical connection from one mandrel to another during galvanic deposition (discussed below). The previously masked portions base top surface 224 are not covered by the metal layer 228. Suitable metals for the base metal layer 228, which as noted above will be the innermost layer of the anode can, include copper, tin or indium. The thickness of the base metal layer 228 may range from 0.2 µm to 10 µm in some embodiments, and may be 2 µm in some embodiments.

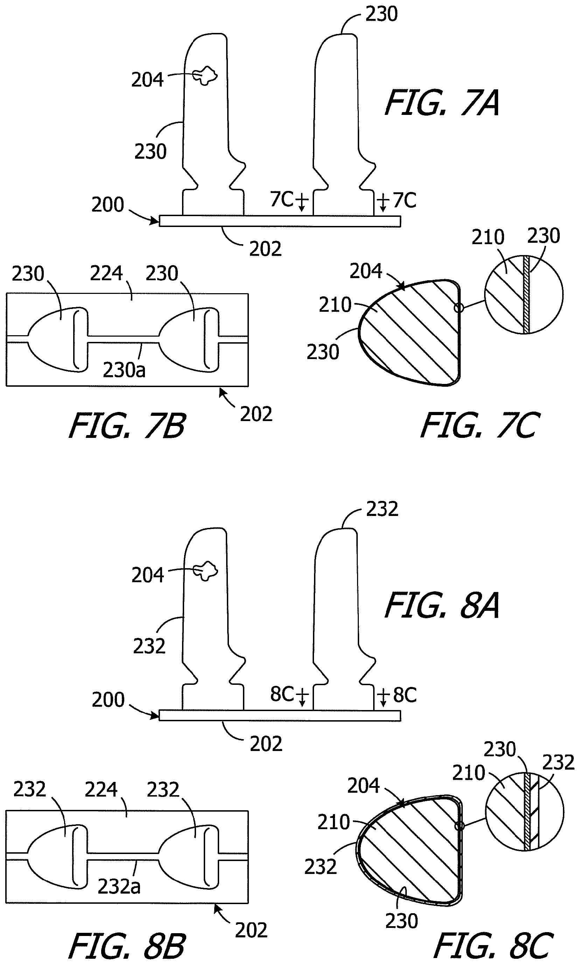

Next, as illustrated in FIGS. 7A-7C, galvanic deposition may be employed to add metal to the base metal layer 228, thereby forming a thicker base metal layer 230 that will continue to define the innermost surface of the completed anode can. The thickness of the base metal layer 230 may range from 5 µm to 50 µm in some embodiments, and may be 20 µm in some embodiments. The thin strip 228a is also thickened, thereby forming strip 230a. The galvanic deposition process will not, however, deposit metal onto the exposed top surface 224 of the polymer base 202. The metal deposited in this galvanic deposition step will be the same as the metal that forms the base metal layer 228, e.g., copper, tin or indium.

Galvanic deposition may then be used to add a reinforcing metal layer to the base metal layer 230. This added layer may be a metal, such as nickel or, which provides mechanical stability to the anode can. Other exemplary metals include nickel-cobalt alloys, gold and silver. To that end, and referring to FIGS. 8A-8C, the thicker base metal layer 230 has been covered by a reinforcing metal layer 232. The thickness of the reinforcing metal layer 232 may range from 20 µm to 1000 µm in some embodiments, and may be 100 µm in some embodiments.

Next, the sacrificial mandrel assembly 200, i.e., the base 202 and the mandrels 204, may be removed. Here, an organic solvent may be employed to dissolve and remove the polymer material. Suitable organic solvents include, as noted above, ethyl acetate, dimethylformamide, tetrahydrofuran, chloroform, and toluene. The remaining structure is a pair of hollow, anode cans 102 in their pre-crimped state that are connected to one another by the strip 232a. The strips 232a may then be removed by a machining or cutting process to separate the anode cans 102 from one another.

Although the inventions disclosed herein have been described in terms of the preferred embodiments above, numerous modifications and/or additions to the above-described preferred embodiments would be readily apparent to one skilled in the art. By way of example, but not limitation, the inventions include any combination of the elements and steps from the various species and embodiments disclosed in the specification that are not already described. It is intended that the scope of the present inventions extend to all such modifications and/or additions and that the scope of the present inventions is limited solely by the claims set forth below.

## Claims

1. An anode can fabrication method, comprising the steps of:
depositing a base layer of tin or indium onto an anode can sacrificial mandrel formed from a polymer that dissolves in the presence of an organic solvent;
adding support metal, that is a different metal than the base layer, to the base layer; and
after the depositing step, dissolving the sacrificial mandrel with the organic solvent.

2. A method as claimed in claim 1, wherein
the anode can sacrificial mandrel includes an anode portion, a cathode portion, and an inwardly contoured region between the anode portion and the cathode portion.

3. A method as claimed in claim 1 or claim 2, wherein
the anode can sacrificial mandrel is formed from a thermoplastic polymer.

4. A method as claimed in any one of claims 1 to 3, wherein
the anode can sacrificial mandrel is part of a sacrificial mandrel assembly that includes a base having a top surface and a plurality of anode can sacrificial mandrels extending from the top surface of the base; and
a portion of the top surface of the base is masked and another portion of the top surface of the base, that extends from one sacrificial mandrel to another sacrificial mandrel, is not masked.

5. A method as claimed in claim 4, further comprising the step of:
adding more of the support metal to the base layer by galvanic deposition to form a thicker base layer of metal.

6. A method as claimed in claim 5, wherein
the support metal comprises nickel.

7. A method as claimed in any one of claims 1 to 6, wherein
the organic solvent is selected from the group consisting of ethyl acetate, dimethylformamide, tetrahydrofuran, chloroform, and toluene.

## Patentansprüche

1. Verfahren zum Herstellen einer Anodendose, mit den Schritten:
Abscheiden einer Basisschicht aus Zinn oder Indium auf einen Anodendosen-Opferdorn, der aus einem Polymer gebildet ist, welches sich in Gegenwart eines organischen Lösungsmittels auflöst;
Hinzufügen von Trägermetall, welches ein anderes Metall als die Basisschicht ist, zu der Basisschicht; und, nach dem Schritt des Abscheidens,
Auflösen des Opferdorns mit dem organischen Lösungsmittel.

2. Verfahren nach Anspruch 1, wobei
der Anodendosen-Opferdorn einen Anodenabschnitt, einen Kathodenabschnitt und einen nach innen konturierten Bereich zwischen dem Anodenabschnitt und dem Kathodenabschnitt umfasst.

3. Verfahren nach Anspruch 1 oder 2, wobei
der Anodendosen-Opferdorn aus einem thermoplastischen Polymer gebildet ist.

4. Verfahren nach einem der Ansprüch 1 bis 3, wobei
der Anodendosen-Opferdorn Teil einer Opferdornanordnung ist, welche eine Basis mit einer oberseitigen Oberfläche und eine Mehrzahl von Anodenbüchsen-Opferdornen aufweist, die sich von der oberseitigen Oberfläche der Basis erstrecken; und
ein Teil der oberseitigen Oberfläche der Basis maskiert ist und ein anderer Teil der oberseitigen Oberfläche der Basis, der sich von einem Opferdorn zu einem anderen Opferdorn erstreckt, nicht maskiert ist.

5. Verfahren nach Anspruch 4 mit dem weiteren Schritt:
Hinzufügen von mehr Trägermetall zu der Basisschicht durch galvanische Abscheidung, um eine dickere Basisschicht aus Metall zu bilden.

6. Verfahren nach Anspruch 5, wobei das Trägermetall Nickel umfasst.

7. Verfahren nach einem der Ansprüche 1 bis 6, wobei
das organische Lösungsmittel aus der Gruppe bestehend aus Ethylacetat, Dimethylformamid, Tetrahydrofuran, Chloroform und Toluol ausgewählt ist.

## Revendications

1. Procédé de fabrication d'une boîte d'anode, comprenant les étapes suivantes:
déposer une couche de base d'étain ou d'indium sur un mandrin sacrificiel de boîte d'anode formé d'un polymère qui se dissout en présence d'un solvant organique;
ajouter du métal de support, qui est un métal différent de la couche de base, à la couche de base; et, après l'étape de déposer,
dissoudre le mandrin sacrificiel avec le solvant organique.

2. Procédé selon la revendication 1, dans lequel
le mandrin sacrificiel de boîte d'anode comprend une partie d'anode, une partie de cathode et une région profilée vers l'intérieur entre la partie d'anode et la partie de cathode.

3. Procédé selon la revendication 1 ou 2, dans lequel
le mandrin sacrificiel de boîte d'anode est formé d'un polymère thermoplastique.

4. Procédé selon l'une des revendications 1 à 3, dans lequel
le mandrin sacrificiel de boîte d'anode fait partie d'un ensemble de mandrin sacrificiel qui comprend une base ayant une surface supérieure et une pluralité des mandrins sacrificiels de boîte d'anode s'étendant de la surface supérieure de la base; et
une partie de la surface supérieure de la base est masquée et une autre partie de la surface supérieure de la base, qui s'étend d'un mandrin sacrificiel à un autre mandrin sacrificiel, n'est pas masquée.

5. Procédé selon la revendication 4, comprenant l'étape suivante:
ajouter plus de métal de support à la couche de base par dépôt galvanique pour former une couche de base plus épaisse de métal.

6. Procédé selon la revendication 5, dans lequel
le métal de support comprend du nickel.

7. Procédé selon l'une des revendications 1 à 6, dans lequel
le solvant organique est sélectionné dans le groupe constitué par l'acétate d'éthyle, le diméthylformamide, le tétrahydrofurane, le chloroforme et le toluène.
